# FASCICULE DE BREVET EUROPEEN

(11) **EP 1 252 967 B1**
(45) Date de publication et mention de la délivrance du brevet: **14.06.2006**
(21) Numéro de dépôt: 01810410.9
(22) Date de dépôt: 25.04.2001
(51) Int. Cl.: B23Q 1/70, B23Q 5/10

(54) **Structure de motobroche**
Spindelstruktur
Spindle structure

(43) Date de publication de la demande: 30.10.2002
(73) Titulaire: TORNOS S.A., 2740 Moutier (CH)
(72) Inventeur: Schuettel, Patrick, 2762 Roches (CH); Schnegg, Jacques, 2735 Bévilard (CH)
(74) Mandataire: BOVARD AG

(56) Documents cités:
- EP-A- 0 235 019
- EP-A- 0 440 096
- US-A- 5 088 362

## Description

L'invention se rapporte à un dispositif motorisé connu sous le nom de broche motorisée, (voir par exemple EP-A-0 235 019).

L'invention se rapporte également à une machine d'usinage équipée d'au moins un dispositif précité.

Les dispositifs du type précité comprennent :
. un premier élément qui est constitué par une paroi tubulaire comportant deux extrémités opposées, et présente un canal et un axe longitudinal s'étendant sensiblement axialement au dispositif,
. un deuxième élément qui, associé à l'une des extrémités du premier élément, constitue un nez de broche, c'est-à-dire un élément d'accouplement avec un équipement tel un mandrin,
. un troisième élément qui, disposé autour du premier élément, constitue un moyen de guidage en rotation de ce premier élément autour de son axe longitudinal, et ce, par rapport à un quatrième élément destiné à réaliser une liaison entre le dispositif et un support,
. un cinquième élément qui, situé autour du premier élément, constitue un moyen moteur d'entraînement en rotation dudit premier élément.

Le moyen de guidage en rotation est d'un type permettant un guidage en rotation de la broche qui est extrêmement précis, et ce, sur une très large gamme de vitesses de rotation.

Outre un outillage adapté, la fabrication des différentes parties de ce moyen de guidage en rotation nécessite de disposer d'un savoir-faire particulier.

Egalement, le moyen moteur d'entraînement en rotation utilisé dans ce contexte est d'un type spécial, et outre un outillage adapté, la fabrication des différentes parties de ce moyen d'entraînement en rotation nécessite également de disposer d'un savoir-faire particulier.

Les dispositifs du type précité qui sont connus sont de fabrication onéreuse, car ils exigent que leur constructeur maîtrise à la fois la technique de fabrication des différentes parties du moteur électrique et la technique de fabrication des différentes parties du moyen de guidage en rotation.

Un résultat que l'invention vise à obtenir est un dispositif dont la fabrication s'affranchit de cette contrainte.

A cet effet, l'invention a pour objet un dispositif du type précité, notamment caractérisé en ce que
- le cinquième élément est lui-même constitué autour d'une pièce allongée et perforée d'un canal axial, laquelle pièce est dite sixième élément,
- le canal axial du sixième élément est d'un diamètre interne supérieur au diamètre externe du premier élément, de manière telle que ledit sixième élément peut, selon son axe longitudinal, être engagé sur le premier élément,
- au moins l'un des éléments que sont le premier élément et le sixième élément est équipé d'un septième élément dont la fonction est d'assurer l'accouplement en rotation desdits premier et sixième éléments.

L'invention a également pour objet une machine d'usinage équipée d'au moins un dispositif précité.

L'invention sera bien comprise à la lecture de la description ci-après faite à titre d'exemple non limitatif, en regard du dessin ci-annexé qui représente :

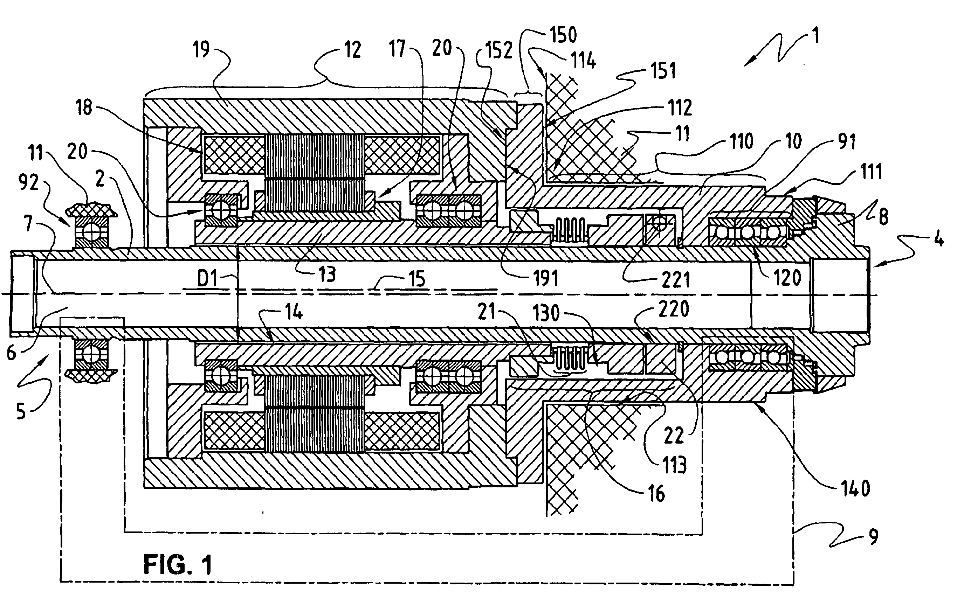

Figure 1 : le dispositif selon l'invention vu en coupe selon un plan longitudinal,

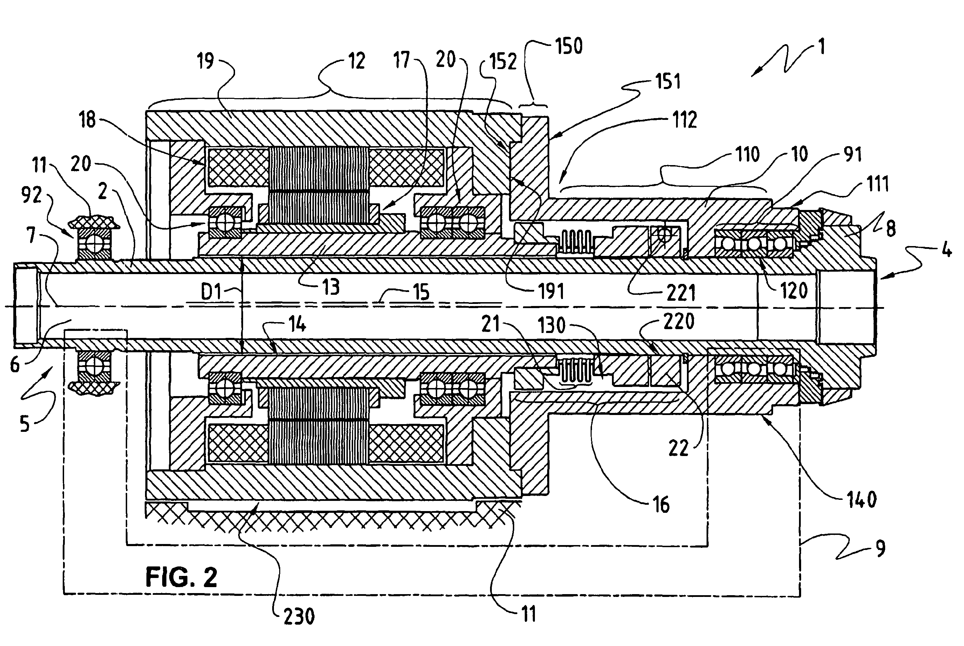

Figure 2 : le dispositif de l'invention suivant une variante de réalisation et vu en coupe selon un plan longitudinal,

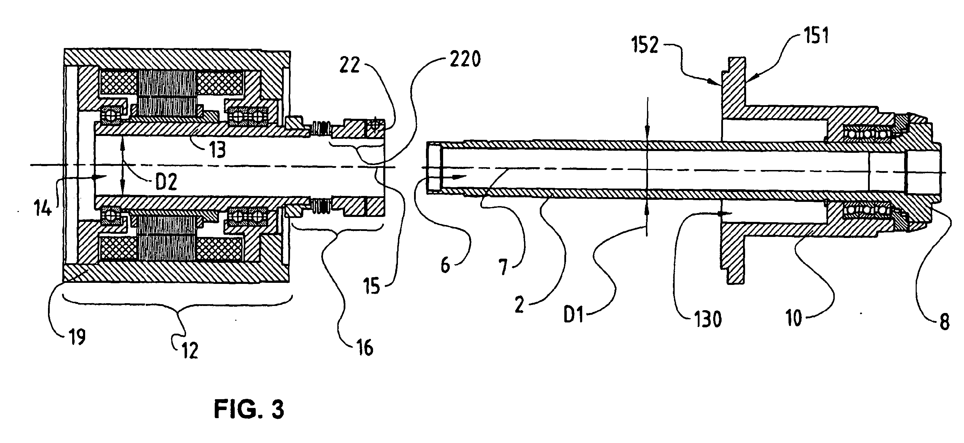

Figure 3 : le dispositif de la figure 1, vu en coupe selon un plan longitudinal et en cours de montage.

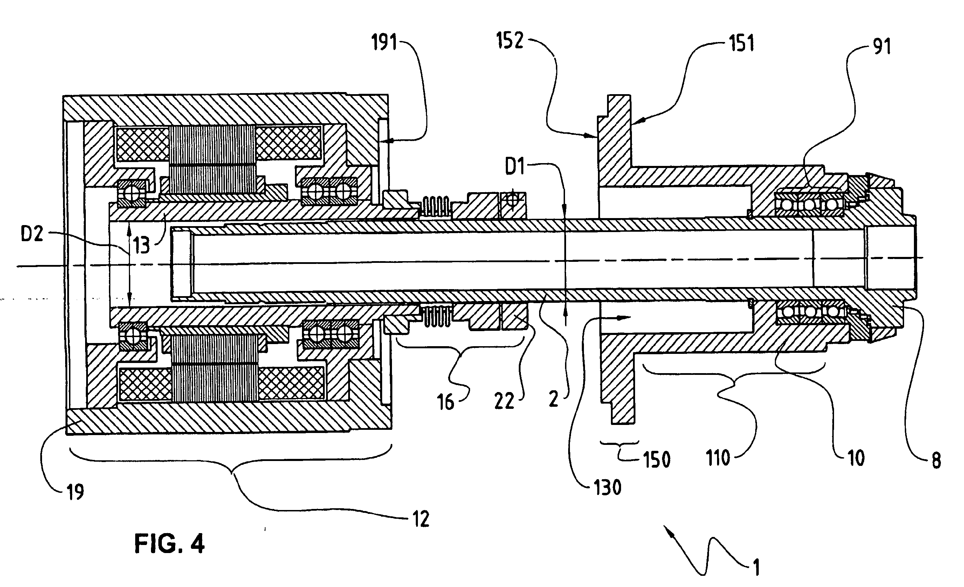

Figure 4 : le dispositif de la figure 1, vu en coupe à l'état démonté.

En se reportant au dessin, on voit un dispositif 1 motorisé comprenant :
- un premier élément 2 qui est constitué par une paroi tubulaire 2 comportant deux extrémités opposées 4, 5, et présente un canal 6 et un axe longitudinal 7 s'étendant sensiblement axialement au dispositif 1,
- un deuxième élément 8 qui, associé à l'une 4 des extrémités 4, 5 du premier élément 2, constitue un nez de broche, c'est-à-dire un élément d'accouplement avec un équipement tel un mandrin,
- un troisième élément 9 qui, disposé autour du premier élément 2, constitue un moyen de guidage en rotation de ce premier élément 2 autour de son axe longitudinal 7, et ce, par rapport à un quatrième élément 10 destiné à réaliser une liaison entre le dispositif 1 et un support 11 fixe en rotation,
- un cinquième élément 12 qui, situé autour du premier élément 2, constitue un moyen moteur d'entraînement en rotation dudit premier élément 2.

Le troisième élément 9 qui constitue un moyen de guidage en rotation du premier élément 2 autour de son axe longitudinal 6, est par exemple constitué par un groupe de roulements, mais le choix du type exact de ce moyen est à la portée de l'homme du métier et n'est donc pas détaillé.

De manière remarquable :
- le cinquième élément 12 est lui-même constitué autour d'une pièce 13 allongée et perforée d'un canal axial 14, laquelle pièce 13 est dite sixième élément 13,
- le canal axial 14 du sixième élément 13 est d'un diamètre interne D1 supérieur au diamètre externe D2 du premier élément 2, de manière telle que ledit sixième élément 13 peut, selon son axe longitudinal 15, être engagé sur le premier élément 2,
- au moins l'un des éléments 2, 13 que sont le premier élément 2 et le sixième élément 13 est équipé d'un septième élément 16 dont la fonction est d'assurer l'accouplement en rotation desdits premier 2 et sixième 13 éléments.

On comprend donc que le cinquième élément 12 constituant le moyen moteur d'entraînement en rotation dudit premier élément 2 n'est pas directement constitué autour du premier élément 2, mais autour d'une pièce 13, qui dite sixième élément 13, est allongée et perforée d'un canal axial 14 dont le diamètre est ajusté de manière à autoriser l'engagement sur le premier élément 2.

Par le respect de ces particularités techniques le dispositif de l'invention peut donc être structuré de manière telle qu'on peut effectivement scinder sa fabrication sans inconvénient et ainsi obtenir le résultat essentiel de l'invention.

De manière également remarquable le cinquième élément 12 constituant le moyen moteur d'entraînement en rotation dudit premier élément 2, consiste en un moteur électrique comportant,
- un rotor 17 constitué autour du sixième élément 13,
- un stator 18 constitué à l'intérieur d'un carter 19 destiné à être associé à un support 11,
- des organes 20 qui, dits de guidage en rotation du rotor 17 dans le carter 19, sont disposés au niveau de chacune des deux extrémités opposées du dit rotor 17.

Le respect de ces particularités techniques participe également à l'obtention du résultat essentiel de l'invention.

De manière remarquable,
- d'une part, lesdits premier et sixième éléments 2 et 13 s'emboîtent librement, et
- d'autre part, le septième élément 16 dont la fonction est d'assurer l'accouplement en rotation desdits premier 2 et sixième 13 éléments comprend un organe élastique 21 qui permet d'assurer la transmission d'un mouvement de rotation entre le sixième élément 13 et le premier élément 2, et ce, en absorbant une différence de position entre les axes longitudinaux 7 et 15 desdits premier 2 et sixième 13 éléments.

Avantageusement, l'organe élastique 21 qui permet d'assurer la transmission d'un mouvement de rotation entre le sixième élément 13 et le premier élément 2, consiste en un soufflet métallique.

Ce type d'organe d'absorption permet également d'absorber au moins en partie des vibrations générées par le moyen moteur 12 d'entraînement en rotation.

De préférence, le septième élément 16 dont la fonction est d'assurer l'accouplement en rotation desdits premier 2 et sixième 13 éléments comprend une bague 22 fendue, destinée à être engagée sur le premier élément et présentant à cet effet un alésage 220, cette bague 22 étant :
- équipée d'au moins un organe 221 permettant de la contracter d'une manière telle que la surface de son alésage 220 peut être fermement appliquée sur le premier élément 2,
- associée à l'organe élastique 21 qui permet d'assurer la transmission d'un mouvement de rotation entre le sixième élément 13 et le premier élément 2.

L'organe 221 qui permet de contracter la bague fendue 220 d'une manière telle que la surface de son alésage 220 peut être fermement appliquée sur le premier élément 2, consiste par exemple en une vis 221 dont la tête de manoeuvre est accessible après emboîtement du sixième élément 13 sur le premier élément 2.

La liaison mécanique entre le septième élément 16 et le sixième élément 13 est, par exemple, également assurée au moyen d'une bague fendue du même type que la bague fendue qui permet d'assurer la liaison avec le premier élément 2.

Ces détails techniques sont à la portée de l'homme du métier.

De manière encore remarquable :
- le troisième élément 9, constituant le moyen 9 de guidage en rotation, est formé de deux parties 91, 92 dont une première 91 est à même de déterminer localement une position axiale et radiale du premier élément 2 et une deuxième 92 est à même d'assurer localement une position radiale dudit premier élément 2,
- la première partie 91 de ce moyen 9 de guidage en rotation est située au niveau de celle des extrémités du premier élément 2 qui porte le deuxième élément 8, dit nez de broche, tandis que la deuxième partie 92 de ce moyen 9 de guidage est située au niveau de l'extrémité opposée dudit premier élément 2,
- le septième élément 16 dont la fonction est d'assurer l'accouplement en rotation desdits premier 2 et sixième 13 éléments est également situé à proximité de ladite première partie 91 dudit troisième élément 9.

Ainsi structuré le dispositif motorisé selon l'invention peut être construit de manière relativement économique et néanmoins présenter des qualités de robustesse et de précisions particulièrement remarquables.

La proximité du septième élément 16 et de la première partie 91 du moyen 9 de guidage en rotation se permet de limiter à sa plus faible valeur la transmission de vibration au premier élément 2.

De manière remarquable, le quatrième élément 10 destiné à réaliser une liaison entre le dispositif 1 et un support 11 fixe en rotation, comprend une partie tubulaire 110 comportant deux extrémités 111, 112 dont :
- une première extrémité 111 présentant,
   - une portée interne 120 d'appui et de maintien de la première partie 91 du troisième élément 9, constituant le moyen 9 de guidage en rotation,
   - situé sensiblement dans l'alignement de cette portée interne 120 et vers la deuxième extrémité 112 de la partie tubulaire 110, un logement 130 destiné à abriter le septième élément 16 assurant la fonction d'accouplement en rotation desdits premier 2 et sixième 13 éléments,
- une deuxième extrémité 112 présentant, une collerette 150 qui s'étend autour de la portée externe 140 d'appui et de centrage et comporte deux faces opposées 151, 152 dont au moins une première face 152 est destinée à coopérer avec une surface 191 qui, prévue sur le carter 19 du cinquième élément 12, constitue le moyen moteur d'entraînement en rotation dudit premier élément 2.

Dans une forme préférée de réalisation, le quatrième élément 10 destiné à réaliser une liaison entre le dispositif 1 et un support 11 fixe en rotation, comprend une partie tubulaire 110 comportant deux extrémités 111, 112 dont:
- une première extrémité 111 présentant,
   - une portée interne 120 d'appui et de maintien de la première partie 91 du troisième élément 9, constituant le moyen 9 de guidage en rotation,
   - situé sensiblement dans l'alignement de cette portée interne 120 et vers la deuxième extrémité 112 de la partie tubulaire 110, un logement 130 destiné à abriter le septième élément 16 assurant la fonction d'accouplement en rotation desdits premier 2 et sixième 13 éléments,
   - une portée externe 140 d'appui et de centrage dans une portée complémentaire 113 présentée par le support fixe 11,
- une deuxième extrémité 112 présentant, une collerette 150 qui s'étend autour de la portée externe 140 d'appui et de centrage et comporte deux faces opposées 151, 152 dont,
   - une première face 152 destinée à coopérer avec une surface 191 prévue sur le carter 19 du cinquième élément 12 qui constitue le moyen moteur d'entraînement en rotation dudit premier élément 2,
   - une deuxième face 151 quant à elle orientée vers la première extrémité 111 de la partie tubulaire 110 et destinée à coopérer avec une surface 114 prévue sur le support fixe 11.

Selon une autre forme de réalisation :
- le quatrième élément 10 destiné à réaliser une liaison entre le dispositif 1 et un support 11 fixe en rotation, comprend une partie tubulaire 110 comportant deux extrémités 111, 112 dont :
   - une première extrémité 111 présentant,
      .. une portée interne 120 d'appui et de maintien de la première partie 91 du troisième élément 9, constituant le moyen 9 de guidage en rotation,
      .. situé sensiblement dans l'alignement de cette portée interne 120 et vers la deuxième extrémité 112 de la partie tubulaire 110, un logement 130 destiné à abriter le septième élément 16 assurant la fonction d'accouplement en rotation desdits premier 2 et sixième 13 éléments,
   - une deuxième extrémité 112 présentant, une collerette 150 qui s'étend autour de la portée externe 140 d'appui et de centrage et comporte deux faces opposées 151, 152 dont, au moins une première face 152 est destinée à coopérer avec une surface 191 qui, prévue sur le carter 19 du cinquième élément 12, constitue le moyen moteur d'entraînement en rotation dudit premier élément 2,
- ledit carter 19 du cinquième élément 12 présente au moins localement une surface 230 permettant d'assurer l'appui et la fixation au support fixe 11.

La partie tubulaire 110 comprend avantageusement un perçage radial (non représenté) qui est situé de manière à permettre la manoeuvre de l'organe 221 de contraction de la bague fendue 220, après emboîtement du sixième élément 13 sur le premier élément 2.

Le dispositif de l'invention comprend évidemment des organes d'assemblage, notamment, du carter 19 et la collerette 150, mais ces organes, dont le choix et la disposition ne posent pas de problème à l'homme du métier, n'ont pas été représentés afin de faciliter la lecture du dessin.

## Revendications

1. Dispositif (1) motorisé comprenant:
. un premier élément (2) qui est constitué par une paroi tubulaire (2) comportant deux extrémités opposées (4, 5), et présente un canal (6) et un axe longitudinal (7) s'étendant sensiblement axialement au dispositif (1),
. un deuxième élément (8) qui, associé à l'une (4) des extrémités (4, 5) du premier élément (2), constitue un nez de broche, c'est-à-dire un élément d'accouplement avec un équipement tel un mandrin,
. un troisième élément (9) qui, disposé autour du premier élément (2), constitue un moyen de guidage en rotation de ce premier élément (2) autour de son axe longitudinal (6), et ce, par rapport à un quatrième élément (10) destiné à réaliser une liaison entre le dispositif (1) et un support (11) fixe en rotation,
. un cinquième élément (12) qui, situé autour du premier élément (2), constitue un moyen moteur d'entraînement en rotation dudit premier élément (2).
ce dispositif (1) étant **caractérisé en ce que** :
- le cinquième élément (12) est lui-même constitué autour d'une pièce (13) allongée et perforée d'un canal axial (14), laquelle pièce (13) est dite sixième élément (13),
- le canal axial (14) du sixième élément (13) est d'un diamètre interne (D1) supérieur au diamètre externe (D2) du premier élément (2), de manière telle que ledit sixième élément (13) peut, selon son axe longitudinal (15), être engagé sur le premier élément (2),
- au moins l'un des éléments (2, 13) que sont le premier élément (2) et le sixième élément (13) est équipé d'un septième élément (16) dont la fonction est d'assurer l'accouplement en rotation desdits premier (2) et sixième (13) éléments.

2. Dispositif selon la revendication 1 **caractérisé en ce que** le cinquième élément (12) constituant le moyen moteur d'entraînement en rotation dudit premier élément (2), consiste en un moteur électrique comportant,
. un rotor (17) constitué autour du sixième élément (13),
. un stator (18) constitué à l'intérieur d'un carter (19) destiné à être associé à un support (11),
. des organes (20) qui, dits de guidage en rotation du rotor (17) dans le carter (19), sont disposés au niveau de chacune des deux extrémités opposées du dit rotor (17).

3. Dispositif selon la revendication 1 ou 2 **caractérisé en ce que** :
- d'une part, lesdits premier et sixième éléments (2) et (13) s'emboîtent librement, et
- d'autre part, le septième élément (16) dont la fonction est d'assurer l'accouplement en rotation desdits premier (2) et sixième (13) éléments comprend un organe élastique (21) qui permet d'assurer la transmission d'un mouvement de rotation entre le sixième élément (13) et le premier élément (2), et ce, en absorbant une différence de position entre les axes longitudinaux (7) et (15) desdits premier (2) et sixième (13) éléments.

4. Dispositif selon la revendication 3 **caractérisé en ce que** le septième élément (16) dont la fonction est d'assurer l'accouplement en rotation desdits premier (2) et sixième (13) éléments comprend une bague (22) fendue, destinée à être engagée sur le premier élément et présentant à cet effet un alésage (220), cette bague (22) étant :
- équipée d'au moins un organe (221) permettant de la contracter d'une manière telle que la surface de son alésage (220) peut être fermement appliquée sur le premier élément (2),
- associée à l'organe élastique (21) qui permet d'assurer la transmission d'un mouvement de rotation entre le sixième élément (13) et le premier élément (2).

5. Dispositif selon l'une quelconque des revendications 1 à 4 **caractérisé en ce que** :
- le troisième élément (9), constituant le moyen (9) de guidage en rotation, est formé de deux parties (91, 92) dont une première (91) est à même de déterminer localement une position axiale et radiale du premier élément (2) et une deuxième (91) est à même d'assurer localement une position radiale dudit premier élément (2),
- la première partie (91) de ce moyen (9) de guidage en rotation est située au niveau de celle des extrémités du premier élément (2) qui porte le deuxième élément (8), dit nez de broche, tandis que la deuxième partie (92) de ce moyen (9) de guidage est située au niveau de l'extrémité opposée dudit premier élément (2),
- le septième élément (16) dont la fonction est d'assurer l'accouplement en rotation desdits premier (2) et sixième (13) éléments est également situé à proximité de ladite première partie (91) dudit troisième élément (9).

6. Dispositif selon la revendication 5 **caractérisé en ce que** le quatrième élément (10) destiné à réaliser une liaison entre le dispositif (1) et un support (11) fixe en rotation, comprend une partie tubulaire (110) comportant deux extrémités (111, 112) dont :
- une première extrémité (111) présentant,
. une portée interne (120) d'appui et de maintien de la première partie (91) du troisième élément (9), constituant le moyen (9) de guidage en rotation,
. situé sensiblement dans l'alignement de cette portée interne (120) et vers la deuxième extrémité (112) de la partie tubulaire (110), un logement (130) destiné à abriter le septième élément (16) assurant la fonction d'accouplement en rotation desdits premier (2) et sixième (13) éléments,
- une deuxième extrémité (112) présentant, une collerette (150) qui s'étend autour de la portée externe (140) d'appui et de centrage et comporte deux faces opposées (151, 152), dont au moins une première face (152) est destinée à coopérer avec une surface (191) qui, prévue sur le carter (19) du cinquième élément (12), constitue le moyen moteur d'entraînement en rotation dudit premier élément (2).

7. Dispositif selon la revendication 5 **caractérisé en ce que** le quatrième élément (10) destiné à réaliser une liaison entre le dispositif (1) et un support (11) fixe en rotation, comprend une partie tubulaire (110) comportant deux extrémités (111, 112) dont :
- une première extrémité (111) présentant,
. une portée interne (120) d'appui et de maintien de la première partie (91) du troisième élément (9), constituant le moyen (9) de guidage en rotation,
. situé sensiblement dans l'alignement de cette portée interne (120) et vers la deuxième extrémité (112) de la partie tubulaire (110), un logement (130) destiné à abriter le septième élément (16) assurant la fonction d'accouplement en rotation desdits premier (2) et sixième (13) éléments,
. une portée externe (140) d'appui et de centrage dans une portée complémentaire (113) présentée par le support fixe (11),
- une deuxième extrémité (112) présentant, une collerette (150) qui s'étend autour de la portée externe (140) d'appui et de centrage et comporte deux faces opposées (151, 152) dont,
. au moins une première face (152) est destinée à coopérer avec une surface (191) qui, prévue sur le carter (19) du cinquième élément (12), constitue le moyen moteur d'entraînement en rotation dudit premier élément (2),
. une deuxième face (151) quant à elle orientée vers la première extrémité (111) de la partie tubulaire (110) et destinée à coopérer avec une surface (114) prévue sur le support fixe (11).

8. Dispositif selon la revendication 5 **caractérisé en ce que** :
- le quatrième élément (10) destiné à réaliser une liaison entre le dispositif (1) et un support (11) fixe en rotation, comprend une partie tubulaire (110) comportant deux extrémités (111, 112) dont :
. une première extrémité (111) présentant,
.. une portée interne (120) d'appui et de maintien de la première partie (91) du troisième élément (9), constituant le moyen (9) de guidage en rotation,
.. situé sensiblement dans l'alignement de cette portée interne (120) et vers la deuxième extrémité (112) de la partie tubulaire (110), un logement (130) destiné à abriter le septième élément (16) assurant la fonction d'accouplement en rotation desdits premier (2) et sixième (13) éléments,
. une deuxième extrémité (112) présentant, une collerette (150) qui s'étend autour de la portée externe (140) d'appui et de centrage et comporte deux faces opposées (151, 152) dont, au moins une première face (152) est destinée à coopérer avec une surface (191) qui, prévue sur le carter (19) du cinquième élément (12), constitue le moyen moteur d'entraînement en rotation dudit premier élément (2),
- ledit carter (19) du cinquième élément (12) présente au moins localement une surface (230) permettant d'assurer l'appui et la fixation au support fixe (11).

9. Machine d'usinage équipée d'au moins un dispositif selon l'une quelconque des revendications 1 à 8.

## Claims

1. Motorised device (1) comprising:
• a first element (2), which is made up of a tubular wall (2) having two opposite ends (4, 5), and has a channel (6) and a longitudinal axis (7) extending substantially axially with respect to the device (1),
• a second element (8) which, connected to one (4) of the ends (4, 5) of the first element (2), is made up of a spindle nose, i.e. an element of coupling with a piece of equipment such as a mandrel,
• a third element (9) which, disposed about the first element (2), is made up of a means of guiding this first element (2) in rotation about its longitudinal axis (6), and this relative to a fourth element (10) intended to achieve a connection between the device (1) and a support (11) fixed with respect to rotation,
• a fifth element (12) which, situated around the first element (2), is made up of a means for driving said first element (2) in rotation,
this device (1) being **characterised in that**:
- the fifth element (12) is itself constructed around an elongated piece (13) and perforated by an axial channel (14), which piece (13) is referred to as sixth element (13),
- the axial channel (14) of the sixth element (13) is of an inner diameter (D1) greater than the outer diameter (D2) of the first element (2) such that said sixth element (13) is able to be engaged along its longitudinal axis (15) on the first element (2),
- at least one of the elements (2, 13), which are the first element (2) and the sixth element (13), is equipped with a seventh element (16), the function of which is to ensure the coupling in rotation of said first (2) and sixth (13) elements.

2. Device according to claim 1, **characterised in that** the fifth element (12), making up the means for driving said first element (2) in rotation, comprises an electric motor having
• a rotor (17) provided around the sixth element (13),
• a stator (18) provided inside a housing (19) intended to be connected to a support (11),
• members (20) which, referred to as members for guiding the rotor (17) in rotation in the housing (19), are disposed at the level of each of the two opposite ends of said rotor (17).

3. Device according to claim 1 or 2, **characterised in that**:
- on the one hand, said first and sixth elements (2) and (13) fit together loosely, and
- on the other hand, the seventh element (16), the function of which is to ensure the coupling in rotation of said first (2) and sixth (13) elements, comprises an elastic piece (21) which makes it possible to ensure the transmission of a rotation movement between the sixth element (13) and the first element (2), and to absorb a difference in radial position between the longitudinal axes (7) and (15) of said first (2) and sixth (13) elements.

4. Device according to claim 3, **characterised in that** the seventh element (16), the function of which is to ensure the coupling in rotation of said first (2) and sixth (13) elements, comprises a split ring (22) intended to be engaged on the first element and having for this purpose a boring (220), this ring (22) being:
- equipped with at least one component (221) allowing it to contract in such a way that the surface of its boring (220) can be firmly pressed on the first element (2),
- connected to the elastic piece (21) which makes it possible to ensure the transmission of a rotation movement between the sixth element (13) and the first element (2).

5. Device according to any one of the claims 1 to 4, **characterised in that**:
- the third element (9), forming the means (9) for guiding in rotation, is formed by two parts (91, 92), a first (91) of which is able to determine locally an axial and radial position of the first element (2) and a second (92) of which is able to ensure locally a radial position of said first element (2),
- the first part (91) of this means (9) for guiding in rotation is situated at the level of that end of the first element (2) which bears the second element (8), referred to as spindle nose, whereas the second part (92) of this guiding means (9) is situated at the level of the opposite end of said first element (2),
- the seventh element (16), the function of which is to ensure the coupling in rotation of said first (2) and sixth (13) elements is likewise situated near said first part (91) of said third element (9).

6. Device according to claim 5, **characterised in that** the fourth element (10) intended to achieve a connection between the device (1) and a support (11) fixed with respect to rotation, comprises a tubular part (110) having two ends (111, 112), being:
- a first end (111) having
• an inner bearing area (120) for pressing and holding the first part (91) of the third element (9), forming the means (9) of guiding in rotation,
• an accommodation (130), situated substantially in the alignment of this inner bearing area (120) and in the vicinity of the second end (112) of the tubular part (110), the accommodation being intended to accommodate the seventh element (16) ensuring the function of coupling said first (2) and sixth (13) elements in rotation,
- a second end (112) having a flange (150) which extends around an outer bearing area (140) for pressing and centring and has two opposite faces (151, 152), at least a first face (152) of which is intended to co-operate with a surface (191) which, provided on the housing (19) of the fifth element (12), comprises the motor means for driving said first element (2) in rotation.

7. Device according to claim 5, **characterised in that** the fourth element (10) intended to achieve a connection between the device (1) and a support (11) fixed with respect to rotation, comprises a tubular part (110) having two ends (111, 112), being:
- a first end (111) having
• an inner bearing area (120) for pressing and holding the first part (91) of the third element (9), forming the means (9) of guiding in rotation,
• an accommodation (130), situated substantially in the alignment of this inner bearing area (120) and in the vicinity of the second end (112) of the tubular part (110), the accommodation being intended to accommodate the seventh element (16) ensuring the function of coupling said first (2) and sixth (13) elements in rotation,
• an outer bearing area (140) for pressing and for centring in a complementary bearing area (113) presented by the fixed support (11),
- a second end (112) having a flange (150) which extends around the outer bearing area (140) for pressing and centring and has two opposite faces (151, 152), of which
• at least one face (152) is intended to co-operate with a first surface (191) which, provided on the housing (19) of the fifth element (12), constitutes the motor means for driving in rotation said first element (2),
• a second face (151), itself oriented toward the first end (111) of the tubular part (110) and intended to co-operate with a surface (114) provided on the fixed support (11).

8. Device according to claim 5, **characterised in that**:
- the fourth element (10), intended to achieve a connection between the device (1) and a support (11) fixed with respect to rotation, comprises a tubular part (110) having two ends (111, 112), being:
• a first end (111) having
■■ an inner bearing area (120) for pressing and holding the first part (91) of the third element (9), forming the means (9) for guiding in rotation,
■■ an accommodation (130), situated substantially in the alignment of this inner bearing area (120) and in the vicinity of the second end (112) of the tubular part (110), the accommodation being intended to accommodate the seventh element (16) ensuring the function of coupling said first (2) and sixth (13) elements in rotation,
• a second end (112) having a flange (150) which extends around an outer bearing area (140) for pressing and centring and has two opposite faces (151, 152), at least a first face (152) of which is intended to co-operate with a first surface (191) which, provided on the housing (19) of the fifth element (12), constitutes the motor means for driving said first element (2) in rotation,
- said housing (19) of the fifth element (12) has at least locally a third surface (230) making it possible to ensure the pressing and the fixing to the fixed support (11).

9. Machining centre equipped with at least one device according to any one of the claims 1 to 8.

## Patentansprüche

1. Motorangetriebene Vorrichtung (1), umfassend:
- ein erstes Element (2), das durch eine Rohrwand (2) mit zwei entgegengesetzten Enden (4, 5) ausgebildet ist, und einen Kanal (6) und eine Längsachse (7) aufweist, die wesentlich axial zu der Vorrichtung (1) verläuft,
ein zweites mit einem Ende (4) der Enden (4, 5) des ersten Elements (2) verbundenes Element (8), das eine Spindelnase bildet, das heißt ein Kupplungselement mit einer Einrichtung wie einem Dorn,
- ein drittes Element (9), das um ein erstes Element (2) angeordnet ist und eine um seine Längsachse (6) drehbares Führungsmittel dieses ersten Elements (2) bildet drehende und dies relativ zu einem vierten Element (10), das dafür geeignet ist, eine Verbindung zwischen der Einrichtung (1) und einer drehfesten Halterung (11) zu erstellen,
- ein fünftes Element (12), das um das erstes Element (2) angeordnet ist, und ein Drehantriebsmittel des gesagten ersten Element(2) bildet,
wobei diese Einrichtung (1) **dadurch gekennzeichnet ist,**
- **dass** das fünfte Element (12) selber um einen länglichen und gelochten Teil (13) eines axialen Kanals (14) ausgebildet ist, wobei dieser Teil (13) als sechstes Element (13) genannt wird (13),
- **dass** der axiale Kanal (14) des sechsten Elements (13) einen Innendurchmesser (D1) hat, der größer ist als der Außendurchmesser (D2) des ersten Elementes (2), so dass das gesagte sechste Element (13) nach seiner Längsachse (15) im Eingriff an dem ersten Element (2) stehen kann,
- **dass** wenigsten ein der Elemente (2, 13), und zwar dem ersten Element (2) und dem sechsten Element (13) mit einem siebten Element (16) ausgestattet ist, dessen Funktion darin besteht, die drehbare Ankoppelung der gesagten ersten (2) und sechsten (13) Elemente zu gewährleisten.

2. Vorrichtung nach Anspruch 1, **dadurch gekennzeichnet, dass** das das Drehantriebsmittel bildende fünfte Element (12) des gesagten Elementes (2) aus einem Elektromotor besteht, der umfasst:
- einen Rotor (17), der um das sechste Element (13) ausgebildet ist,
- einen Stator (18), der in einem Gehäuse (19) ausgebildet ist, das geeignet ist, einem Träger (11) zugeordnet zu sein,
- Organe (20), die als Drehführung des Rotors (17) in dem Gehäuse (19) an den jeweiligen beiden Enden des gesagten Rotors (17) angeordnet sind.

3. Vorrichtung nach Anspruch 1 oder 2, **dadurch gekennzeichnet**
- **dass** einerseits die ersten und zweiten Elemente (2) und (13) frei ineinander einsteckbar sind, und
- **dass** andererseits das siebte Element (16), dessen Funktion die drehbare Ankoppelung der ersten (2) und sechsten Elementen (13) zu gewährleisten ist, ein Federelement (21) umfasst, das die Übertragung einer Drehbewegung zwischen dem sechsten Element (13) und dem ersten Element (2) gewährleisten kann, und dies durch Ausgleich einer Positionsdifferenz zwischen den Längsachsen (7) und (15) den gesagten ersten (2) und sechsten (13) Elementen.

4. Vorrichtung nach Anspruch 3, **dadurch gekennzeichnet, dass** das siebte Element (16), deren Funktion die drehbare Ankopplung der gesagten ersten (2) und sechsten (13) Elemente ist, einen gespalten Ring (22) umfasst, der dafür geeignet ist, an dem ersten Element einzugreifen, und hierzu eine Bohrung (220) aufweist, wobei dieser Ring (22)
- mindestens mit einem Organ (221) versehen ist, das dessen Zusammenziehen derart ermöglicht, dass die Fläche seiner Bohrung (220) fest an dem ersten Element (2) anliegen kann,
- dem Federelement (21) zugeordnet ist, das ermöglicht, die Übertragung einer Drehbewegung zwischen dem sechsten Element (13) und dem erste Element (2) zu gewährleisten.

5. Vorrichtung nach irgendeinem der Ansprüche 1 bis 4, **dadurch gekennzeichnet:**
- **dass** das dritte Element (9), das das drehendes Führungsmittel (9) bildet, durch zwei Teile (91, 92) gebildet ist, dessen erster Teil (91) in der Lage ist eine axiale und eine radiale Position des ersten Elementes (2) lokal zu ermitteln, und dessen zweiter Teil (91) in der Lage ist, eine radiale Position des ersten Elementes (2) lokal zu sichern,
- **dass** der erste Teil (91) dieses drehenden Führungsmittels (9) bei den Enden des ersten Elements (2) liegt, das das zweite Element (8), die sogenannte Spindelnase, trägt, während derzweite Teil (92) dieses Führungsmittels (9) sich an dem entgegengesetzten Ende des gesagten ersten Elementes (2) befindet,
- **dass** der siebte Teil (16), dessen Funktion darin besteht, die drehende Ankoppelung der erste (2) und der sechsten (13) Elemente zu gewährleisten, ebenfalls in der Nähe des ersten Teiles (91) des dritten Elementes (9) liegt.

6. Vorrichtung nach Anspruch 5, **dadurch gekennzeichnet, dass** das vierte Element (10), das dazu bestimmt ist, eine Verbindung zwischen der Vorrichtung (1) und einem drehfesten Träger (11), einen rohrförmigen Teil (110) umfasst, der zwei Ende (111, 112) hat,
wobei ein erstes Ende (111)
- eine interne Auflage- und Haltefläche (120) des ersten Teils (91) des dritten Elements (9) umfasst, das das drehende Führungsmittel (9) bildet,
- das wesentlich mit dieser internen Auflagefläche (120) ausgerichtet und in Richtung auf das zweite Ende (112) des rohrförmigen Teils (110) angeordnet ist, eine Lagerung (130) zur Aufnahme des siebten Elements (16) umfasst, das die drehende Ankopplungsfunktion der gesagten ersten (2) und sechsten (13) Elemente gewährleistet,
- wobei ein zweites Ende (112) einen Kragen (150) aufweist, der sich um die interne Auflage- und Zentrierfläche (140) erstreckt und zwei entgegengesetzte Seiten (151, 152) aufweist, davon mindestens eine erste Seite (152) für eine Zusammenarbeit mit einer Fläche (191) geeignet ist, die an dem Gehäuse (19) des fünften Elements (12) vorgesehen ist und das Drehantriebsmittel des ersten Elements (2) bildet.

7. Vorrichtung nach Anspruch 5, **dadurch gekennzeichnet, dass** das vierte Element (10) zur Erstellung einer Verbindung zwischen der Vorrichtung (1) und einer drehfesten Halterung (11) vorgesehen ist und einen rohrförmigen Teil (110) mit zwei Enden (111, 112) umfasst,
wobei ein erstes Ende (111),
- eine interne Auflage- und Haltefläche (120) des ersten Teils (91) des dritten Elements (9) aufweist, das das drehende Führungsmittel (9) bildet,
- das wesentlich mit dieser internen Auflagefläche (120) ausgerichtet und in Richtung auf die zweite Ende (112) des rohrförmigen Teils (110) angeordnet ist, eine Lagerung (130) zur Aufnahme des siebten Elements (16) aufweist, das die drehende Ankopplungsfunktion der gesagten ersten (2) und sechsten (13) Elemente gewährleistet,
- eine externe Auflage- und Zentrierfläche (140) in einer zusätzlichen Auflagefläche (113) aufweist, die sich an der feststehend Halterung (11) befindet,
- wobei ein zweites Ende (112) einen Kragen (150) aufweist, der sich um die interne Auflage- und Zentrierfläche (140) erstreckt und zwei entgegengesetzte Seiten (151, 152) aufweist,
- wobei davon mindestens eine erste Seite (152) für eine Zusammenarbeit mit einer Fläche (191) geeignet ist, die an dem Gehäuse (19) des fünften Elements (12) vorgesehen ist und das Drehantriebsmittel des ersten Elements (2) bildet,
- eine zweite Seite (151), die ihrerseits in Richtung des Endes (111) des rohrförmigen Teils (110) orientiert ist und mit einer an dieser festen Halterung (11) vorgesehenen Fläche (114) zusammenarbeitet.

8. Vorrichtung nach Anspruch 5, **dadurch gekennzeichnet, dass** das vierte Element (10) zur Erstellung einer Verbindung zwischen der Vorrichtung (1) und einer drehfesten Halterung (11) vorgesehen ist, und einen rohrförmigen Teil (110) mit zwei Enden (111, 112) umfasst,
wobei ein erstes Ende (111),
- eine interne Auflage- und Haltefläche (120) des ersten Teils (91) des dritten Elements (9) aufweist, das das drehende Führungsmittel (9) bildet,
- das wesentlich mit dieser internen Auflagefläche (120) ausgerichtet und in Richtung auf die zweite Ende (112) des Rohrförmigen Teils (110) angeordnet ist, eine Lagerung (130) zur Aufnahme des siebten Elements (16) aufweist, das die drehbare Ankopplungsfunktion der gesagten ersten (2) und sechsten (13) Elemente gewährleistet,
- wobei ein zweites Ende (112) einen Kragen (150) aufweist, der sich um die interne Auflage- und Zentrierfläche (140) erstreckt und zwei entgegengesetzte Seiten (151, 152) aufweist, davon mindestens eine erste Seite (152) für die Zusammenarbeit mit einer Fläche (191) geeignet ist, die an dem Gehäuse (19) des fünften Elements (12) vorgesehen ist und das Drehantriebsmittel des ersten Elements (2) bildet,
- wobeidas gesagte Gehäuse (19) des fünften Elements (12) mindestens örtlich eine Fläche (230) aufweist, die das Abstützen und die Befestigung an der feststehenden Halterung (11) ermöglicht.

9. Bearbeitungsmaschine, die mindestens mit einer Vorrichtung nach irgendeinem der Ansprüche 1 bis 8 ausgerüstet ist.
